# EUROPEAN PATENT SPECIFICATION

(11) **EP 4 001 092 B1**
(45) Date of publication and mention of the grant of the patent: **05.03.2025**
(21) Application number: 20306408.4
(22) Date of filing: 19.11.2020
(51) Int. Cl.: B63J 2/12, H02K 9/12, B63H 5/125, H02K 5/20, H02K 9/04

(54) **COOLING ROTATING INTERFACE OF A PROPULSION ORIENTED DEVICE.**
KÜHLENDE DREHOBERFLÄCHE EINES ANTRIEBSORIENTIERTEN GERÄTS
INTERFACE ROTATIVE DE REFROIDISSEMENT D'UN DISPOSITIF ORIENTÉ DE PROPULSION

(43) Date of publication of application: 25.05.2022
(73) Proprietor: AETC SAPPHIRE, Saint Petersburg 191014 (RU)
(72) Inventor: MELOT, Julien, 54250 CHAMPIGNEULLES (FR)
(74) Representative: Casalonga

(56) References cited:
- EP-A1- 2 944 561
- WO-A1-01/81170

## Description

The present invention relates to the field of propulsion oriented devices for a vessel, and more specifically to a cooling rotating interface.

Propulsion oriented devices, also known under the acronym "POD", are used for propulsion of ships, vessels or the like. A propulsion oriented device generally includes a gondola attached to a part of the vessel, for instance to the hull of the vessel. The gondola is mechanically linked to the vessel in such a way that it may pivot about an axis, generally substantially vertical.

The gondola accommodates a propulsion shaft which supports, for example, a propeller. The rotation of the propulsion shaft makes the propeller rotate and causes propulsion of the vessel.

In order to ensure the rotation of the propulsion shaft, some propulsion oriented devices include an electric motor accommodated inside the gondola. For instance, the electric motor may include a stator attached to the gondola and a rotor attached to the propulsion shaft.

Document EP2944561A1 discloses a propulsion oriented device with an electric motor inside the gondola and an arrangement to cool it down which comprises a cooling rotating interface.

A drawback of such an arrangement is that the electric motor may generate an important amount of heat. To remedy to this drawback, it has been proposed a cooling system including an airflow generator mounted on the vessel, a cooler able to cool an airflow generated by the airflow generator, a duct to convey the cold airflow from the cooler to the electric motor and a duct to convey a warm airflow from the electric motor to the cooler. Since the airflows need to have a portion within the ship and a portion within the gondola, a cooling rotating interface is foreseen to pass the airflows over the boundary between the vessel to the gondola. To do so, a cooling rotating interface generally includes, in the referential of the vessel, a static air box and a rotating air diffuser. A dynamic sealing is implemented between the air box and the air diffuser, which isolates the cold and warm airflows from each other.

Although such cooling systems are generally considered satisfactory, it appears sometimes that the pressure drop inside the ducts of the cooling system depend on the steering angular position. As a result, the cooling performance of the electric motor depends on the steering angle of the propulsion oriented device. For a vessel equipped with more than one propulsion oriented device, angular orientation of some of the propulsion oriented devices may lead to performance power imbalance and/or derating.

The invention aims at overcoming the above-mentioned drawbacks.

More specifically, the invention aims at providing a cooling rotating interface which allows obtaining flow rates for the warm and cold fluid flows which do not depend on a steering angular position of a propulsion oriented device.

According to the invention, it is proposed a cooling rotating interface according to the features of current claim 1.

In an embodiment, the inner cylinder has a circular axial cross section, the air box having a circular axial cross section, the axial cross section of the air box having a diameter equal to a diameter of the axial cross section of the inner cylinder multiplied by a factor within a range 1,3 to 1,5.

Such an arrangement allows having an area for the cold air flow substantially equal to the area for the warm air flow, taking into account the presence of elements typically present in a cooling rotating interface of propulsion oriented devices, such as traverses or gratings, which obstruct partially the fluid flow inside the inner cylinder.

According to the invention, the main portion includes a truncated cone having a first smaller diameter circular end and a second larger diameter circular end, the first circular end being intended to be closer to the vessel than the second circular end.

Such an arrangement allows having a transition between a cooling rotating interface and an internal volume of the propulsion oriented device, in a particularly adapted manner for a part manufactured by boilermaking.

In an advantageous manner, the truncated cone includes an inner protrusion extending radially inwards from the second circular end.

The inner protrusion allows supporting a ring for sealing the first and second fluid paths from each other.

One may also foresee a peripheral portion radially surrounding the main portion and including an outer cylinder of revolution intended to be located radially outwards the air box, with reference to the axis of rotation.

Having a peripheral portion including a cylinder of revolution allows keeping the same area for the warm air flow substantially equal to the area for the cold air flow despise increase of the latter in the truncated cone, while reducing the volume of a closed space intended to contain oil for lubricating a steering assembly. In case the central channel is used for the warm air flow, the same advantages may be obtained

Preferably, the outer cylinder has a circular axial cross-section, a diameter of the outer cylinder being equal to a diameter of the axial cross-section of the second circular end multiplied by a factor within a range 1,2 to 1,6.

Such an arrangement allows increasing the diameter at the same level as the truncated cone while avoiding perturbation of the fluid flow due to excessive speed variations of the fluid on a short distance.

One may also foresee a plurality of radially extending joining parts attaching the peripheral portion to the main portion.

In an embodiment, the joining parts have a thickness along the tangential direction within a range 10 mm to 30 mm.

Preferably, the joining parts have a thickness along the tangential direction within a range 12 mm to 20 mm.

In another embodiment, the joining parts are regularly spread over the circumference of the main portion so that the angle between two adjacent joining parts taken among the plurality of joining parts is within 30° and 50°.

Such a plurality of joining parts allows attaching the main and peripheral portions to each other without excessively perturbating the fluid flow between the air diffuser and the air box.

In an embodiment, the peripheral portion includes a crown protruding radially outwards from the outer cylinder.

This crown allows attaching the air diffuser to an end cover attached to a slewing bearing or a steering arrangement of the propulsion oriented device.

One may also foresee at least one static seal ring chosen among a first static seal ring in axial contact with the crown and a second static seal ring in radial contact with the outer cylinder.

This static seal ring allows implementing a sealing at a contact location between the peripheral portion and the end cover, inter alia so as to seal the closed space intended to contain oil for lubricating the steering assembly.

In another embodiment, the peripheral portion includes a first collar extending radially inwards from a first end of the outer cylinder, the first end being intended to be proximate to the vessel, the peripheral portion including a cylindrical protrusion extending axially from an inner edge of the first collar and on a side of the first collar opposite to the side in which the outer cylinder is located.

The cylindrical protrusion allows supporting a dynamic seal ring between the peripheral portion and the steering top cover, inter alia so as to seal the closed space intended to contain oil for lubricating the steering assembly.

According to the invention, it is proposed a cooling rotating interface for a propulsion oriented device pivotable relative to a vessel around an axis of rotation, the cooling rotating interface including an air box intended to be attached to the vessel, a first fluid path for a cold fluid flow, a second fluid path for a warm fluid flow, and an air diffuser as defined above, wherein the air diffuser delimits the first and second fluid paths from each other.

Preferably, the air box includes a part of revolution coaxial to the main portion, the cooling rotating interface including a labyrinth seal located axially between the air diffuser and the part of revolution.

This labyrinth seal allows implementing a dynamic seal so as to isolate the airflows from each other.

The present invention and its advantages will be better understood by studying the detailed description of a specific embodiment given by way of nonlimiting examples and illustrated by the appended drawings on which:
- figure 1 is a perspective view of a cooling rotating interface according to one embodiment of the present invention,
- figure 2 is a perspective view of an air box of the cooling rotating interface of figure 1,
- figure 3 is a top view of the air box of figure 2,
- figure 4 is a cross-sectional view of the airbox of figures 2 and 3,
- figure 5 is another cross-sectional view of the air box of figures 2 to 4,
- figure 6 is a perspective view of an air diffuser of the cooling rotating interface of figure 1,
- figure 7 is a top view of the air diffuser of figure 6,
- figure 8 is a cross-sectional view of the air diffuser of figures 6 and 7,
- figure 9 is another cross-sectional view of the air diffuser of figures 6 to 8,
- figure 10 is a cross-sectional view, taken along the same plane as figure 9, of the cooling rotating interface of figure 1,
- figure 11 is a detail view of a sealing arrangement between the air diffuser and the air box, and
- figure 12 is a detail view of a sealing arrangement between the air diffuser and an end cover of the propulsion oriented device.

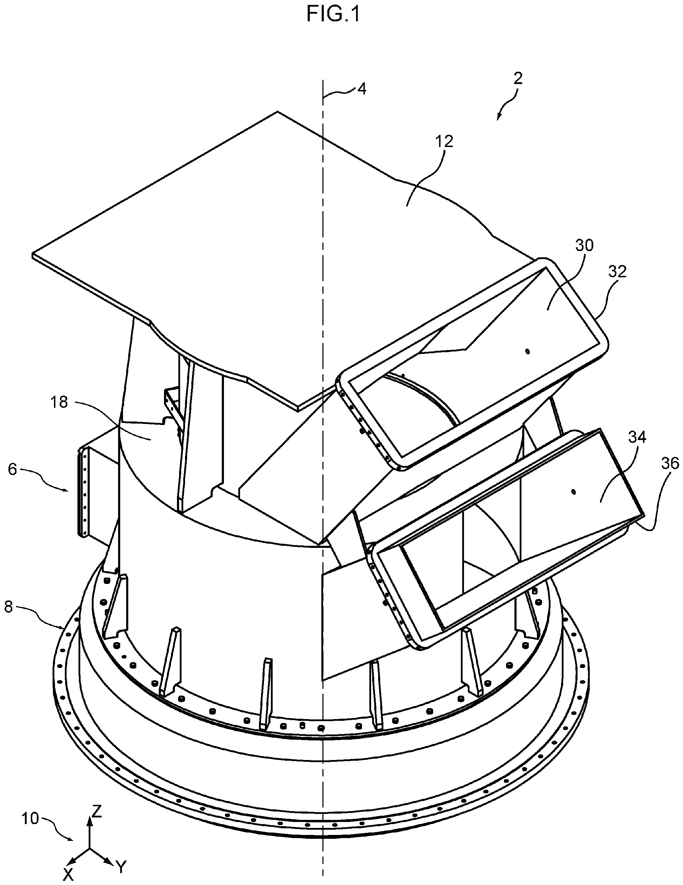

With reference to figure 1, it is schematically depicted a cooling rotating interface 2. The cooling rotating interface 2 is intended to be installed between a propulsion oriented device (not shown) and a part of a vessel, for instance the hull of the vessel (not shown). The vessel is located above the cooling rotating interface 2 whereas the propulsion oriented device is located below the cooling rotating interface 2. The propulsion oriented device is pivotable relative to the vessel around an axis of rotation 4.

The cooling rotating interface 2 is intended to lead a cold airflow from a cooler located inside the vessel into an electric motor located inside the propulsion oriented device, and to lead a warm airflow from the electric motor into the cooler. To that end, the cooling rotating interface 2 includes an air box 6 and an air diffuser 8. The air box 6 is attached to the vessel whereas the air diffuser 8 is attached to the propulsion oriented device. Hence, the air diffuser 8 is able to rotate, with respect to the air box 6, about the axis of rotation 4.

It is defined an orthonormal direct vector basis 10 attached to the air box 6. The basis 10 consist of a vector X, a vector Y and a vector Z. The vector Z is parallel to the axis of rotation 4.

In the present application, the terms "axial", "radial", "tangential" and variations thereof will be understood as referring to the axis of rotation 4. The words "cylinder" and "cylindrical" will be understood according to their common definition, being namely that a cylindrical surface is a surface consisting of all the points on all the lines which are parallel to a given line and which pass through a fixed plane curve in a plane not parallel to the given line. The words "up", "low", "down" and variations thereof will be understood as referring to the basis 10 when the cooling rotating interface 2 is normally installed on a vessel, that is assuming that the vector Z is substantially vertically upwardly directed.

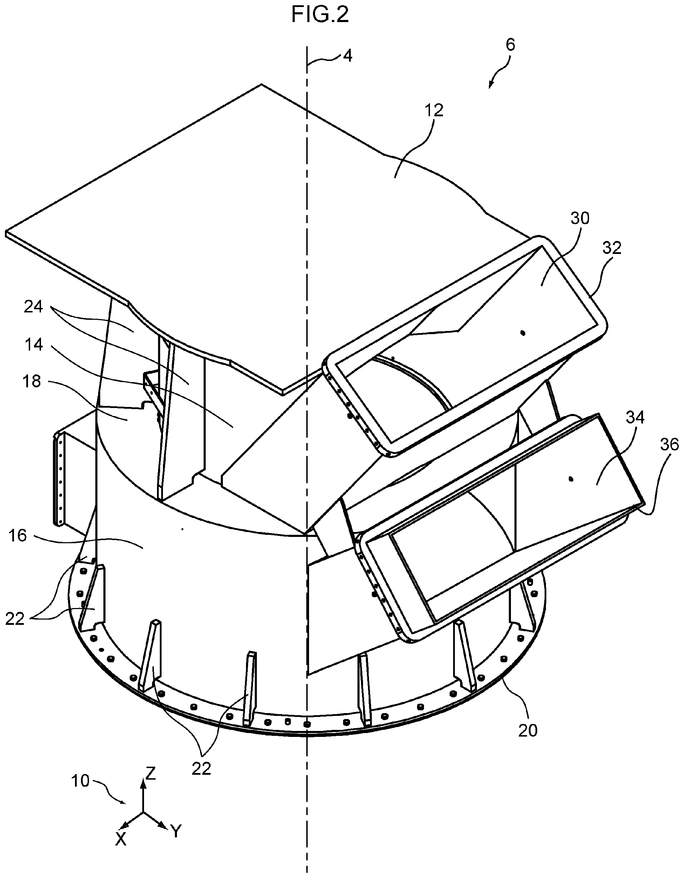

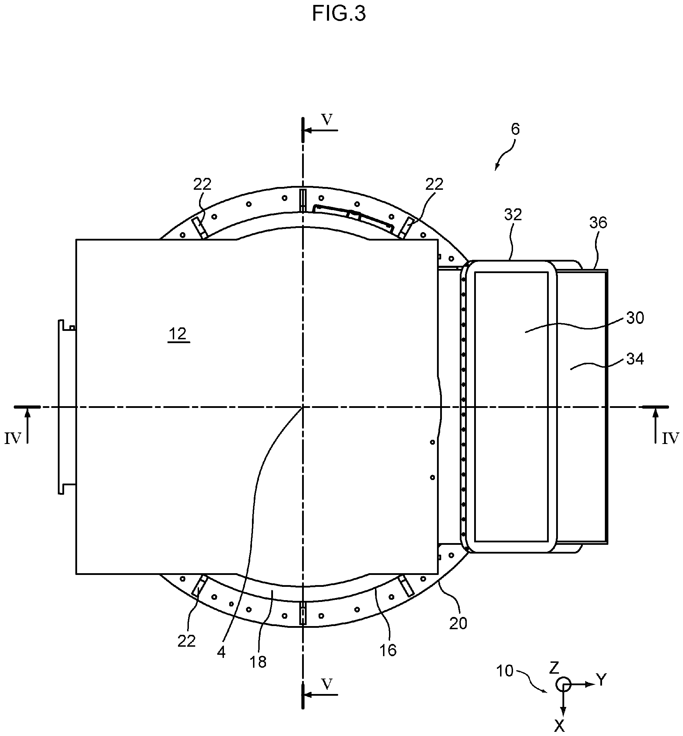

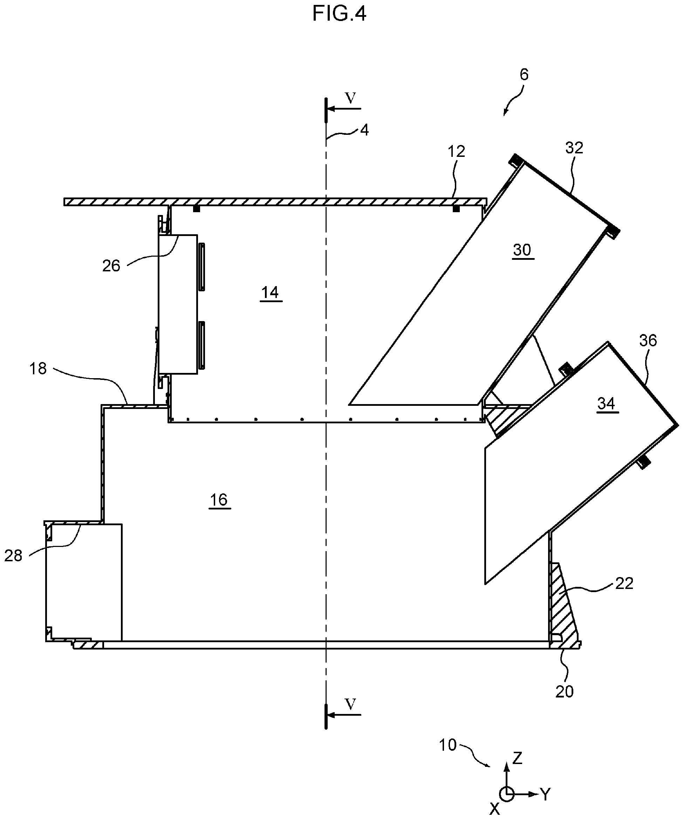

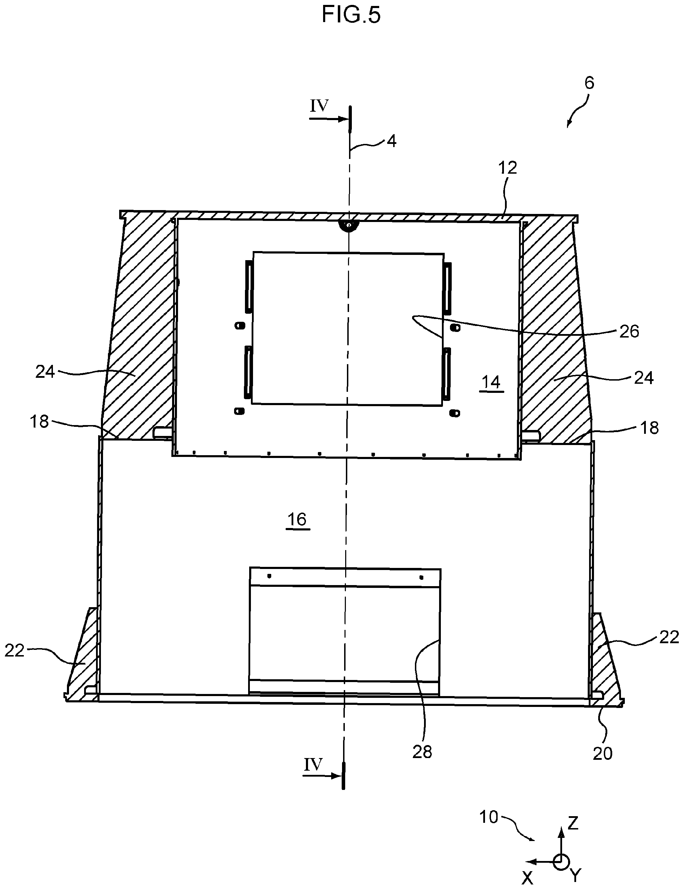

Referring to figures 1 to 5, the air box 6 includes an upper, flat plate 12 perpendicular to the vector Z.

The air box 6 further includes an upper cylinder of revolution 14 and a lower cylinder of revolution 16. The cylinders 14 and 16 have a circular axial cross-section around the axis 4 and with respective diameters d₁₄, d₁₆. The diameter d₁₆ is strictly greater than the diameter d₁₄. More specifically, the diameter d₁₄ is within a range 1700 mm to 1900 mm and the diameter d₁₆ is within a range 2500 mm to 2750 mm. A lower end of the cylinder 14 is linked to an upper end of the cylinder 16 by a flat, frontal surface 18 perpendicular to the vector Z. The upper plate 12 is linked to an upper end of the cylinder 14.

On the lower end of the cylinder 16, the air box 6 includes a collar 20. The collar 20 extends radially outwards from the lower end of the cylinder 16.

The air box 6 includes a plurality of, e.g. eleven (11) reinforcing ribs 22. The reinforcing ribs 22 are intended to strengthen the fixation of the collar 20 to the cylinder 16. The air box 6 further includes a plurality of, e.g. four (4) reinforcing ribs 24. The reinforcing ribs 24 extend radially outwards from the cylinder 14. The reinforcing ribs 24 extend axially between the upper plate 12 and the frontal surface 18.

The air box 6 includes a rectangular hatch 26 arranged on the cylinder 14. The hatch 26 is intended to allow a technician to access, from the vessel, to the inner volume of the propulsion oriented device.

The air box 6 further includes a hatch 28 arranged on the cylinder 16, proximate to the collar 20. The hatch 28 intends to allow implementing a maintenance of a seal ring installed proximate to the collar 20, such as an air diffuser - steering top cover oil dynamic seal.

The air box 6 further includes an upper duct 30 with an upper port 32, and a lower duct 34 with a lower port 36. The ducts 30 and 34 are intended to be fluidly connected, via the respective ports 32 and 36, with flexible tubes of a cooling system of the propulsion oriented device. More specifically, the upper duct 30 is intended to be connected to a flexible tube fluidly connected to an outlet of a cooler (not depicted) of the cooling system, whereas the lower duct 34 is intended to be fluidly connected to a flexible tube fluidly connected to the inlet of the cooler. An airflow generator, such as a fan (not depicted), is mounted on one of these flexible tubes.

Hence, through the air box 6, a cold airflow coming from the cooler passes through the upper duct 30 whereas a warm airflow, directed towards the cooler, passes through the lower duct 34.

Without departing from the scope of the invention, one may connect the upper duct 30 to the inlet of the cooler and connect the lower duct 34 with the outlet of the cooler. In such case, the cold air flow passes through the lower duct 34 whereas the warm air flow passes through the upper duct 30.

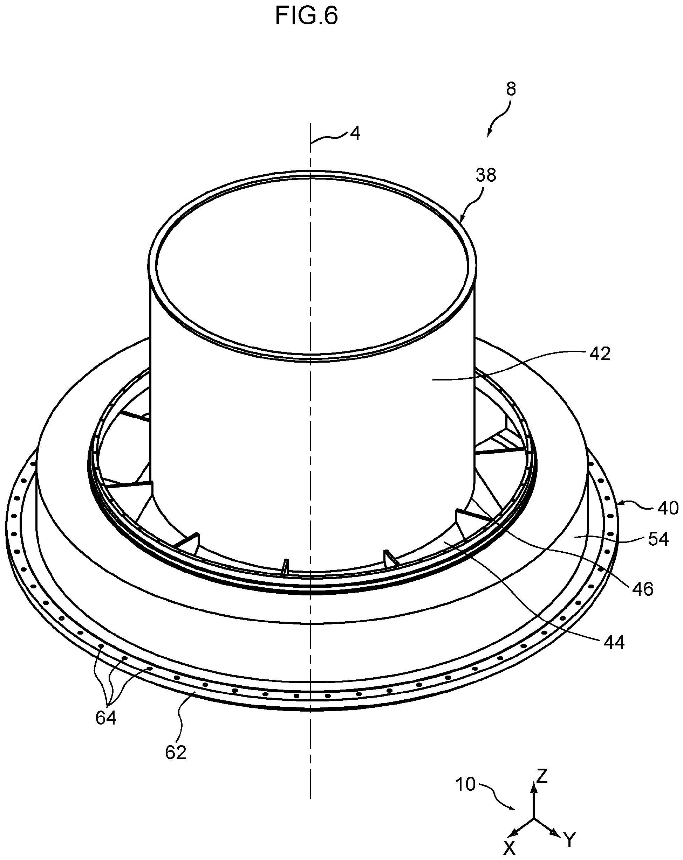

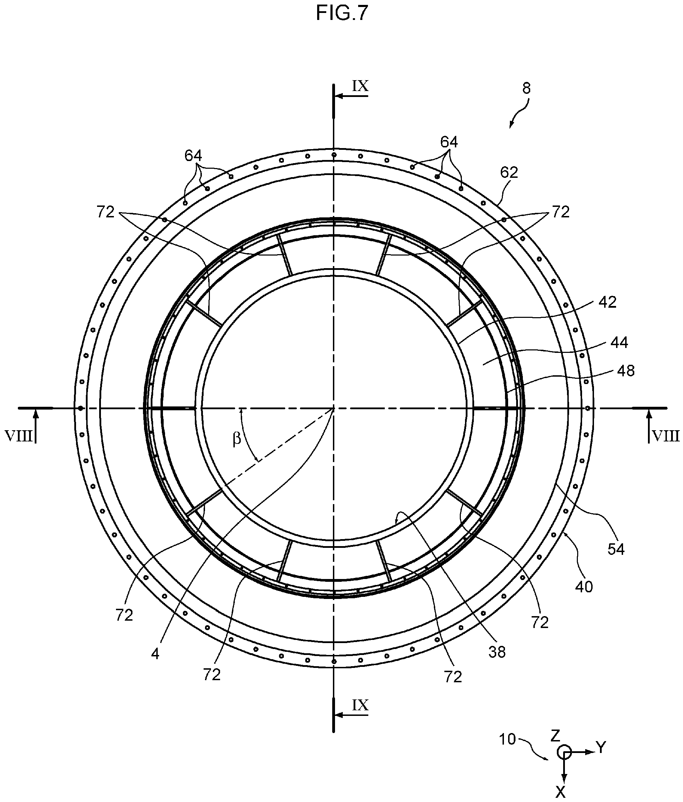

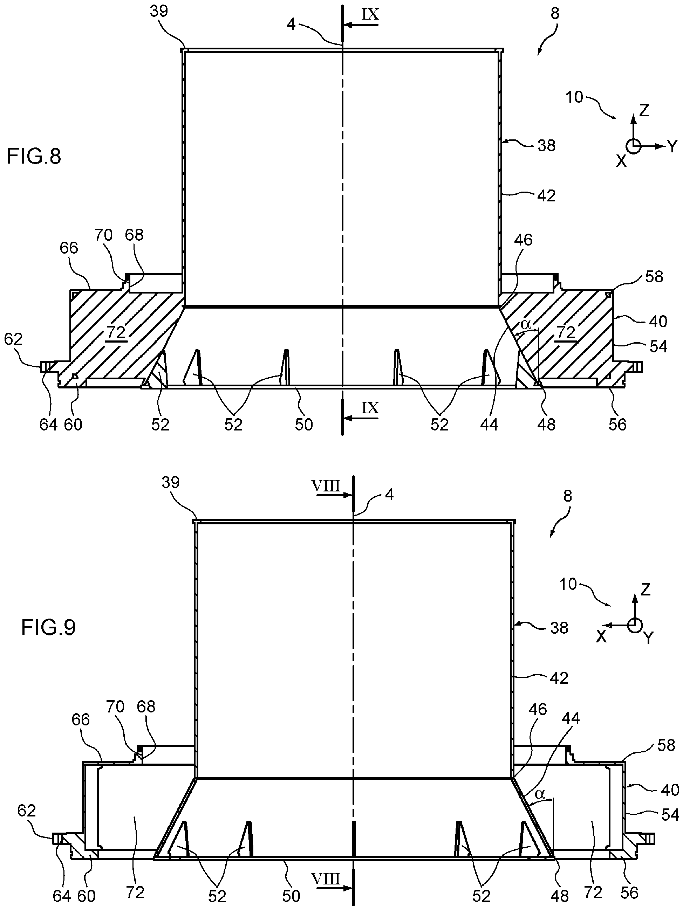

Referring now to figures 6 to 9, the air diffuser 8 includes a main portion 38 and a peripheral portion 40. The peripheral portion 40 radially surrounds the main portion 38. More specifically, the radial location of the peripheral portion 40 is outwards from the radial location of the cylinder 16 of the air box 6, and the axial location of the peripheral portion 40 is right below the cylinder 16. The main portion 38 is located radially inside the cylinder 16. The main portion 38 includes a top end 39 axially located right below the cylinder 14. The cylinder 14 includes a seal 41 and/or a labyrinth seal (not depicted) implementing a dynamic sealing between the cylinder 14 and the top end 39.

The main portion 38 includes an upper cylinder of revolution 42 and a lower truncated cone 44. The axis of revolution of the cylinder 42 and the axis of revolution of the truncated cone 44 are the same as the axis of rotation 4. The angle α of the truncated cone 44 with reference to the direction of the vector Z is within 25° and 30°.

The axial cross-section of the cylinder 42 is circular around the axis of rotation 4 and has a diameter d₄₂ equal to the diameter d₁₄. The truncated cone 44 includes an upper end 46 and a lower end 48. The truncated cone 44 is joined to the cylinder 42 by its upper end 46. The ends 46 and 48 are two circles around the axis of rotation 4, having respective diameters d₄₆ and d₄₈. The diameter d₄₆ equals the diameter d₄₂. The diameter d₄₈ is strictly larger than the diameter d₄₆. In the depicted embodiments, the diameter d₄₈ is within a range 2150 mm to 2350 mm.

Hence, the main portion 38 is a solid of revolution around the axis of rotation 4. The main portion 38 delimits a first fluid path, being inside the cylinder 42 and the cone 44, for the cold airflow delivered by the upper duct 30, from a second fluid path, being between the cylinder 42 and the cylinder 16, for the warm fluid flow collected by the lower duct 34.

The main portion 38 includes a radial protrusion 50 extending radially inwards from the truncated cone 44, at its lower end 48. The main portion includes a plurality of, e.g. ten (10) reinforcing ribs 52 which strengthen the fixation of the protrusion 50 to the truncated cone 44. The protrusion 50 intends to allow the fixation of a static seal ring (not depicted) located inside the inner volume of the propulsion oriented device.

The peripheral portion 40 includes a cylinder of revolution 54. The cylinder 54 has a circular axial cross-section around the axis of rotation 4 with a diameter d₅₄ within a range 2 600 mm to 3 400 mm. The cylinder 54 includes a lower end 56 and an upper end 58. The peripheral portion 40 includes a lower collar 60 extending radially inwards from the cylinder 54, at its lower end 56.

The peripheral portion 40 includes a crown 62 extending radially outwards from the cylinder 54. The crown 62 includes a plurality of through bores 64 intended to allow the fixation of the air diffuser 8 to a part, e.g. a steering end cover of the propulsion oriented device.

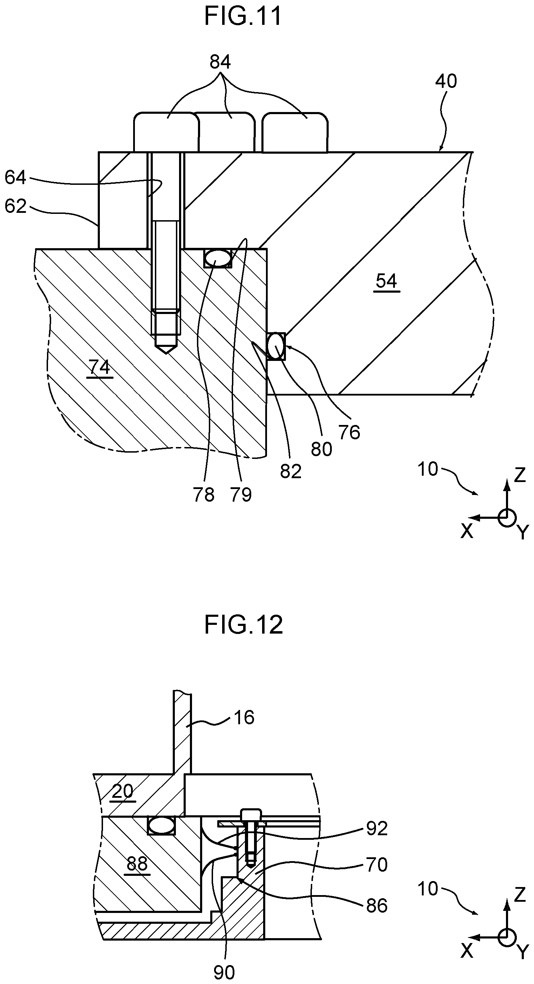

With reference to figure 11, it is depicted a seal arrangement 76 between the peripheral portion 40 and an end cover 74 of the propulsion oriented device. The end cover 74 may be attached to a mobile part of a steering arrangement of the propulsion oriented device. The seal arrangement 76 includes a static seal ring 78 received in a groove 79 of the end cover 74, and a static seal ring 80 received in a groove 82 of the cylinder 54. The seal ring 78 is in static axial contact with the crown 62 whereas the seal ring 80 is in static radial contact with a cylindrical surface of the end cover 74. A plurality of screws 84 attach the end cover 74 and the crown 62 to each other.

The peripheral portion 40 includes an upper collar 66 extending radially inwards from the cylinder 54 at its upper end 58. The upper collar 66 includes a radial inner edge 68 having the shape of a circle around the axis of rotation 4 and with a diameter d₆₈. In the depicted embodiment, the diameter d₆₈ is within a range 2350 mm to 2550 mm.

The peripheral portion 40 includes a cylindrical protrusion 70 extending axially upwards from the edge 68.

Hence, the collar 20, the collar 66 and the cylindrical protrusion 70 allow the fixation of a dynamic seal arrangement between a steering top cover and the air diffuser 8.

The air diffuser 8 further includes a plurality of, e.g. ten (10) attaching ribs 72. The attaching ribs 72 extend radially outwards from the lower end of the cylinder 42 and from the truncated cone 44. The attaching ribs 72 extend radially inwards from the cylinder 54 and axially downwards from the upper collar 66. Hence, the attaching ribs 72 allow attaching the main portion 38 and the peripheral portion 40.

The attaching ribs 72 are regularly spread over the circumference of the truncated cone 44. Hence, the angle β between two adjacent ribs 72 is within a range to 30° to 50°. In the depicted embodiment, the angle between two adjacent ribs 72 is 36°.

In the depicted embodiment, the ribs 72 have a thickness within a range 12 mm to 20 mm, and more specifically a thickness being equal to 16 mm.

Referring now to figure 12, a dynamic seal arrangement 86 is depicted between a steering top cover 88 and the air diffuser 8. Namely, the top cover 88 may be attached to a static part of the steering arrangement and the air box 6 may be attached to the top cover 88. The seal arrangement 86 may include a first lip seal 90 and a second lip seal 92 attached to the cylindrical protrusion 70. Using two lip seals for implementing dynamic sealing between the cylindrical protrusion 70 and the top cover 88 allows improving the sealing effect relative to the air flow passing through the cooling rotating interface, and relative to oil lubricating inside the steering arrangement.

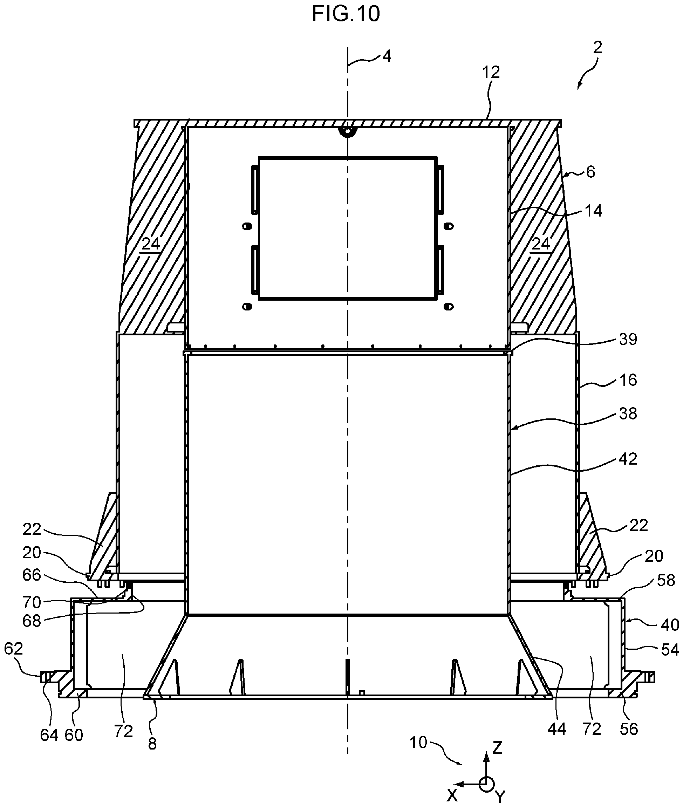

As depicted on figure 10, when the peripheral portion 40 is located right below the cylinder 16, the main portion 38 is right below the cylinder 14. Hence, the main portion 38 is able to seal the first fluid path and the second fluid path from each other. Because the main portion 38 is a solid of revolution, the pressure drop in the first fluid path and in the second fluid path remain the same regardless of the angular orientation of the propulsion oriented device. Furthermore, due to the small thickness of the attaching ribs 52, the perturbations to the warm airflow circulating through the second fluid path are little.

## Claims

1. Cooling rotating interface (2) for a propulsion oriented device pivotable relative to a vessel around an axis of rotation (4), the cooling rotating interface (2) including an air box (6) intended to be attached to the vessel, and an air diffuser (8) intended to be attached to the propulsion oriented device, and including a main portion (38) being a solid of revolution around the axis of rotation (4) **characterized in that** the air box (6) comprises :
- an upper cylinder of revolution (14) and a lower cylinder of revolution (16), each having a circular axial cross-section around the axis of rotation (4), the diameter (d16) of the lower cylinder of revolution (16) being strictly greater than the diameter (d14) of the upper cylinder of revolution (14), and
- an upper duct (30) and a lower duct (34), **in that** the air diffuser (8) comprises :
- a peripheral portion (40) surrounding the main portion (38) and radially located outwards from the lower cylinder (16) and axially located right below said lower cylinder (16), the main portion (38) being located radially inside the lower cylinder (16), and comprising an inner cylinder of revolution (42) circular around the axis of rotation (4) and having a diameter (d42) equal to the diameter of the upper cylinder of revolution (14) and a truncated cone (44) having a first circular end (46) and a second circular end (48), the second circular end (48) having a larger diameter than the first circular end (48), the first circular end (46) being preferably intended to be closer to the vessel than the second circular end (48), and **in that** the main portion (38) delimits a first fluid path inside the inner cylinder of revolution (42) and the truncated cone (44) through the upper cylinder (14) and the upper duct (30) and a second fluid path, between the inner cylinder of revolution (42) and the lower cylinder of revolution (16) through the lower duct (34).

2. Cooling rotating interface (2) according to claim 1, wherein the inner cylinder (42) has a circular axial cross section, the air box (6) having a circular axial cross section, the axial cross section of the air box (6) having a diameter equal to a diameter of the axial cross section of the inner cylinder (42) multiplied by a factor within a range 1,3 to 1,5.

3. Cooling rotating interface (2) according to claim 1 or 2, wherein the truncated cone (44) of the air diffuser (8) includes an inner protrusion (50) extending radially inwards from the second circular end (48).

4. Cooling rotating interface (2) according to any of the preceding claims, wherein the air diffuser (8) further includes a peripheral portion (40) radially surrounding the main portion (38) and including an outer cylinder of revolution (54) intended to be located radially outwards the air box (6), with reference to the axis of rotation.

5. Cooling rotating interface (2) according to claim 4, wherein the outer cylinder (54) has a circular axial cross-section, a diameter of the outer cylinder (54) being equal to a diameter of the axial cross-section of the second circular end (48) multiplied by a factor within a range 1,2 to 1,6.

6. Cooling rotating interface (2) according to claim 4 or 5, wherein the air diffuser (8) further includes a plurality of radially extending joining parts (72) attaching the peripheral portion (40) to the main portion (38).

7. Cooling rotating interface (2) according to claim 6, wherein the joining parts (72) have a thickness along the tangential direction within a range 10 mm to 30 mm, and preferably within a range 12 mm to 20 mm.

8. Cooling rotating interface (2) according to claim 6 or 7, wherein the joining parts (72) are regularly spread over the circumference of the main portion (38) so that the angle (β) between two adjacent joining parts (72) taken among the plurality of joining parts (72) is within 30° and 50°.

9. Cooling rotating interface (2) according to any of claims 5 to 8, wherein the peripheral portion (40) includes a crown (62) protruding radially outwards from the outer cylinder (54).

10. Cooling rotating interface (2) according to claim 9, wherein the air diffuser (8) further including at least one static seal ring chosen among a first static seal ring (78) in axial contact with the crown (62) and a second static seal ring (80) in radial contact with the outer cylinder (54).

11. Cooling rotating interface (2) according to any of claims 5 to 10, wherein the peripheral portion (40) includes a first collar (66) extending radially inwards from a first end (58) of the outer cylinder (54), the first end (58) being intended to be proximate to the vessel, the peripheral portion (40) including a cylindrical protrusion (70) extending axially from an inner edge (68) of the first collar (66) and on a side of the first collar (66) opposite to the side in which the outer cylinder (54) is located.

12. Cooling rotating interface (2) according to any of the preceding claims, wherein the air box (6) includes a part of revolution coaxial to the main portion (38), the cooling rotating interface (2) including a labyrinth seal (90) located axially between the air diffuser (8) and the part of revolution.

## Patentansprüche

1. Kühlende rotierende Schnittstelle (2) für eine antriebsorientierte Vorrichtung, die im Verhältnis zu einem Behälter um eine Rotationsachse (4) schwenkbar ist, wobei die kühlende rotierende Schnittstelle (2) einen Luftkasten (6), der am Behälter befestigt werden soll, und einen Luftverteiler (8) enthält, der an der antriebsorientierten Vorrichtung befestigt werden soll, sowie einen Hauptabschnitt (38) enthält, der ein um die Rotationsachse (4) Rotationskörper ist, **dadurch gekennzeichnet, dass** der Luftkasten (6) Folgendes umfasst:
- einen oberen Rotationszylinder (14) und einen unteren Rotationszylinder (16), die jeweils einen kreisförmigen axialen Querschnitt um die Rotationsachse (4) aufweisen, wobei der Durchmesser (d16) des unteren Rotationszylinders (16) strikt größer ist als der Durchmesser (d14) des oberen Rotationszylinders (14), und
- einen oberen Kanal (30) und einen unteren Kanal (34), dadurch, dass der Luftverteiler (8) Folgendes umfasst:
- einen Umfangsabschnitt (40), der den Hauptabschnitt (38) umgibt und sich vom unteren Zylinder (16) radial nach außen befindet und sich axial direkt unterhalb des unteren Zylinders (16) befindet, wobei sich der Hauptabschnitt (38) radial innerhalb des unteren Zylinders (16) befindet und einen inneren Rotationszylinder (42), der kreisförmig um die Rotationsachse (4) verläuft und einen Durchmesser (d42) aufweist, der dem Durchmesser des oberen Rotationszylinders (14) gleich ist, und einen Kegelstumpf (44) umfasst, der ein erstes kreisförmiges Ende (46) und ein zweites kreisförmiges Ende (48) aufweist, wobei das zweite kreisförmige Ende (48) einen größeren Durchmesser als das erste kreisförmige Ende (48) aufweist, wobei das erste kreisförmige Ende (46) vorzugsweise näher am Behälter liegen soll als das zweite kreisförmige Ende (48), und dadurch, dass der Hauptabschnitt (38) einen ersten Fluidpfad innerhalb des inneren Rotationszylinders (42) und des Kegelstumpfes (44) durch den oberen Zylinder (14) und den oberen Kanal (30) und einen zweiten Fluidpfad zwischen dem inneren Rotationszylinder (42) und dem unteren Rotationszylinder (16) durch den unteren Kanal (34) begrenzt.

2. Kühlende rotierende Schnittstelle (2) nach Anspruch 1, wobei der innere Zylinder (42) einen kreisförmigen axialen Querschnitt aufweist, wobei der Luftkasten (6) einen kreisförmigen axialen Querschnitt aufweist, wobei der axiale Querschnitt des Luftkastens (6) einen Durchmesser aufweist, der einem Durchmesser des axialen Querschnitts des inneren Zylinders (42) ist, multipliziert mit einem Faktor im Bereich von 1,3 bis 1,5.

3. Kühlende rotierende Schnittstelle (2) nach Anspruch 1 oder 2, wobei der Kegelstumpf (44) des Luftverteilers (8) einen inneren Vorsprung (50) enthält, der sich vom zweiten kreisförmigen Ende (48) radial nach innen erstreckt.

4. Kühlende rotierende Schnittstelle (2) nach einem der vorhergehenden Ansprüche, wobei der Luftverteiler (8) ferner einen Umfangsabschnitt (40) enthält, der den Hauptabschnitt (38) radial umgibt und einen äußeren Rotationszylinder (54) enthält, der sich in Bezug auf die Rotationsachse vom Luftkasten (6) radial nach außen befinden soll.

5. Kühlende rotierende Schnittstelle (2) nach Anspruch 4, wobei der äußere Zylinder (54) einen kreisförmigen axialen Querschnitt aufweist, wobei ein Durchmesser des äußeren Zylinders (54) gleich einem Durchmesser des axialen Querschnitts des zweiten kreisförmigen Endes (48) ist, multipliziert mit einem Faktor im Bereich von 1,2 bis 1,6.

6. Kühlende rotierende Schnittstelle (2) nach Anspruch 4 oder 5, wobei der Luftverteiler (8) ferner eine Vielzahl von sich radial erstreckenden Verbindungsteilen (72) enthält, die den Umfangsabschnitt (40) am Hauptabschnitt (38) befestigen.

7. Kühlende rotierende Schnittstelle (2) nach Anspruch 6, wobei die Verbindungsteile (72) entlang der tangentialen Richtung eine Dicke im Bereich von 10 mm bis 30 mm, und vorzugsweise im Bereich von 12 mm bis 20 mm, aufweisen.

8. Kühlende rotierende Schnittstelle (2) nach Anspruch 6 oder 7, wobei die Verbindungsteile (72) regelmäßig über den Umfang des Hauptabschnitts (38) verteilt sind, so dass der Winkel (β) zwischen zwei benachbarten Verbindungsteilen (72) aus der Vielzahl von Verbindungsteilen (72) zwischen 30° und 50° beträgt.

9. Kühlende rotierende Schnittstelle (2) nach einem der Ansprüche 5 bis 8, wobei der Umfangsabschnitt (40) eine Krone (62) enthält, die vom äußeren Zylinder (54) radial nach außen vorsteht.

10. Kühlende rotierende Schnittstelle (2) nach Anspruch 9, wobei der Luftverteiler (8) ferner mindestens einen statischen Dichtungsring enthält, ausgewählt aus einem ersten statischen Dichtungsring (78), der in axialem Kontakt mit der Krone (62) steht, und einem zweiten statischen Dichtungsring (80), der in radialem Kontakt mit dem äußeren Zylinder (54) steht.

11. Kühlende rotierende Schnittstelle (2) nach einem der Ansprüche 5 bis 10, wobei der Umfangsabschnitt (40) einen ersten Kragen (66) enthält, der sich von einem ersten Ende (58) des äußeren Zylinders (54) radial nach innen erstreckt, wobei das erste Ende (58) in der Nähe des Behälters liegen soll, wobei der Umfangsabschnitt (40) einen zylindrischen Vorsprung (70) enthält, der sich axial von einer Innenkante (68) des ersten Kragens (66) und auf einer Seite des ersten Kragens (66) gegenüber der Seite erstreckt, an der sich der äußere Zylinder (54) befindet.

12. Kühlende rotierende Schnittstelle (2) nach einem der vorhergehenden Ansprüche, wobei der Luftkasten (6) ein zum Hauptabschnitt (38) koaxiales Rotationsteil enthält, wobei die kühlende rotierende Schnittstelle (2) eine Labyrinthdichtung (90) enthält, die sich axial zwischen dem Luftverteiler (8) und dem Rotationsteil befindet.

## Revendications

1. Interface rotative de refroidissement (2) pour un dispositif orienté de propulsion pouvant pivoter par rapport à un navire autour d'un axe de rotation (4), l'interface rotative de refroidissement (2) comportant un caisson d'air (6) destiné à être fixé au navire, et un diffuseur d'air (8) destiné à être fixé au dispositif orienté de propulsion, et comportant une partie principale (38) qui est un solide de révolution autour de l'axe de rotation (4) **caractérisée en ce que** le caisson d'air (6) comprend
- un cylindre supérieur (14) de révolution et un cylindre inférieur (16) de révolution, chacun ayant une section axiale circulaire autour de l'axe de rotation (4), le diamètre (d16) du cylindre inférieur (16) de révolution étant strictement supérieur au diamètre (d14) du cylindre supérieur (14) de révolution,
- un conduit supérieur (30) et un conduit inférieur (34), **en ce que** le diffuseur d'air (8) comprend
- une partie périphérique (40) entourant la partie principale (38) et située radialement vers l'extérieur depuis le cylindre inférieur (16) et située axialement juste en dessous dudit cylindre inférieur (16), la partie principale (38) étant située radialement à l'intérieur du cylindre inférieur (16), et comprenant un cylindre intérieur (42) de révolution circulaire autour de l'axe de rotation (4) et ayant un diamètre (d42) égal au diamètre du cylindre supérieur (14) de révolution et un cône tronqué (44) ayant une première extrémité circulaire (46) et une deuxième extrémité circulaire (48), la deuxième extrémité circulaire (48) ayant un diamètre supérieur à la première extrémité circulaire (48), la première extrémité circulaire (46) étant de préférence destinée à être plus proche du navire que la deuxième extrémité circulaire (48), et **en ce que** la partie principale (38) délimite un premier trajet de fluide à l'intérieur du cylindre intérieur (42) de révolution et du cône tronqué (44) à travers le cylindre supérieur (14) et le conduit supérieur (30) et un deuxième trajet de fluide, entre le cylindre intérieur (42) de révolution et le cylindre inférieur (16) de révolution à travers le conduit inférieur (34).

2. Interface rotative de refroidissement (2) selon la revendication 1, dans laquelle le cylindre intérieur (42) a une section axiale circulaire, le caisson d'air (6) ayant une section axiale circulaire, la section axiale du caisson d'air (6) ayant un diamètre égal à un diamètre de la section axiale du cylindre intérieur (42) multiplié par un facteur dans une plage de 1,3 à 1,5.

3. Interface rotative de refroidissement (2) selon la revendication 1 ou 2, dans laquelle le cône tronqué (44) du diffuseur d'air (8) comporte une saillie intérieure (50) s'étendant radialement vers l'intérieur depuis la deuxième extrémité circulaire (48).

4. Interface rotative de refroidissement (2) selon l'une quelconque des revendications précédentes, dans laquelle le diffuseur d'air (8) comporte en outre une partie périphérique (40) entourant radialement la partie principale (38) et comportant un cylindre extérieur (54) de révolution destiné à être situé radialement vers l'extérieur du caisson d'air (6), en référence à l'axe de rotation.

5. Interface rotative de refroidissement (2) selon la revendication 4, dans laquelle le cylindre extérieur (54) a une section axiale circulaire, un diamètre du cylindre extérieur (54) étant égal à un diamètre de la section axiale de la deuxième extrémité circulaire (48) multiplié par un facteur dans une plage de 1,2 à 1,6.

6. Interface rotative de refroidissement (2) selon la revendication 4 ou 5, dans laquelle le diffuseur d'air (8) comporte en outre une pluralité de parties d'assemblage (72) s'étendant radialement fixant la partie périphérique (40) à la partie principale (38).

7. Interface rotative de refroidissement (2) selon la revendication 6, dans laquelle les parties d'assemblage (72) ont une épaisseur le long de la direction tangentielle dans une plage de 10 mm à 30 mm, et de préférence dans une plage de 12 mm à 20 mm.

8. Interface rotative de refroidissement (2) selon la revendication 6 ou 7, dans laquelle les parties d'assemblage (72) sont réparties régulièrement sur la circonférence de la partie principale (38) de sorte que l'angle (β) entre deux parties d'assemblage (72) adjacentes prises parmi la pluralité de parties d'assemblage (72) soit dans les 30° et 50°.

9. Interface rotative de refroidissement (2) selon l'une quelconque des revendications 5 à 8, dans laquelle la partie périphérique (40) comporte une couronne (62) faisant saillie radialement vers l'extérieur depuis le cylindre extérieur (54).

10. Interface rotative de refroidissement (2) selon la revendication 9, dans laquelle le diffuseur d'air (8) comporte en outre au moins une bague d'étanchéité fixe choisie parmi une première bague d'étanchéité fixe (78) en contact axial avec la couronne (62) et une deuxième bague d'étanchéité fixe (80) en contact radial avec le cylindre extérieur (54).

11. Interface rotative de refroidissement (2) selon l'une quelconque des revendications 5 à 10, dans laquelle la partie périphérique (40) comporte un premier collet (66) s'étendant radialement vers l'intérieur depuis une première extrémité (58) du cylindre extérieur (54), la première extrémité (58) étant destinée à être à proximité du navire, la partie périphérique (40) comportant une saillie cylindrique (70) s'étendant axialement depuis un bord intérieur (68) du premier collet (66) et sur un côté du premier collet (66) opposé au côté dans lequel le cylindre extérieur (54) est situé.

12. Interface rotative de refroidissement (2) selon l'une quelconque des revendications précédentes, dans laquelle le caisson d'air (6) comporte une partie de révolution coaxiale par rapport à la partie principale (38), l'interface rotative de refroidissement (2) comportant un joint à labyrinthe (90) situé axialement entre le diffuseur d'air (8) et la partie de révolution.
